# NEUE EUROPÄISCHE PATENTSCHRIFT

(11) **EP 0 696 347 B2**
(45) Veröffentlichungstag und Bekanntmachung des Hinweises auf die Entscheidung über den Einspruch: **11.12.2002**
(45) Hinweis auf die Patenterteilung: 01.04.1998
(21) Anmeldenummer: 94915142.7
(22) Anmeldetag: 28.04.1994
(51) Int. Cl.: G01B 17/00

(54) **EINRICHTUNG ZUM ERFASSEN DES DURCHMESSERS UND/ODER DER LAGE DES ZENTRUMS EINES RUNDEN GEGENSTANDES**
DEVICE FOR DETERMINING THE DIAMETER AND/OR LOCATING THE CENTER OF A ROUND OBJECT
DISPOSITIF PERMETTANT DE DETECTER LE DIAMETRE ET/OU LA POSITION DU CENTRE D'UN OBJET ROND

(30) Priorität: 30.04.1993 DE 93107101
(43) Veröffentlichungstag der Anmeldung: 14.02.1996
(73) Patentinhaber: SIEMENS AKTIENGESELLSCHAFT, 80333 München (DE)
(72) Erfinder: DIETZ, Ferdinand, D-70499 Stuttgart (DE); GFRÖRER, Martin, D-79232 March (DE); LUBER, Ernst, D-92259 Neukirchen (DE)
(86) Internationale Anmeldenummer: EP9401351
(87) Internationale Veröffentlichungsnummer: WO94025825

(56) Entgegenhaltungen:
- EP-B- 0 519 090
- US-A- 4 095 475
- US-A- 5 097 881
- "Geräte-Information E101 Serie 942 "Geräte-Information E101 Serie 942 Ultraschall-Abstandssensoren", Honeywell Ultraschall-Abstandssensoren", Honeywell MICRO Switch, 1990, DB-1031.7, Seiten 2, 9, MICRO Switch, 1990, DB-1031.7, Seiten 2, 9, 10 10

## Beschreibung

Die Erfindung bezieht sich auf eine Einrichtung zum Erfassen des Durchmessers und/oder der Lage des Zentrums eines runden Gegenstandes, insbesondere eines Baumstammes, unter Verwendung von reflektorisch arbeitenden Abstandsmeßeinrichtungen, die vorzugsweise nach dem Ultraschallprinzip arbeiten, wobei von den Abstandsmeßergebnissen einer Zeile jeweils das jeweils kleinste Meßergebnis in einer elektronischen Auswerteeinrichtung zur Durchmesserbestimmung und/oder Lagebestimmung für das Zentrum herangezogen wird.

Verfahren zum Vermessen von Baumstämmen in einem Sägewerk sind beispielsweise aus der Druckschrift "Lignotron" der Siemens AG, Bestellnr. A19100-E872-A180 bekannt. Bei diesem Verfahren wird mit Hilfe von drei Schattenbildkameras der mittlere Stammdurchmesser erfaßt. Zum andern kann der Krümmungsverlauf längs des Stammes ermittelt werden. Dieser ergibt sich beispielsweise aus den Ortskoordinaten des Zentrums des jeweiligen Schattenbildes. Derartige Einrichtungen haben sich im Betrieb bewährt, jedoch ist durch den Einsatz von Schattenbildkameras ein relativ hoher technischer Aufwand erforderlich.

Im Handel erhältlich sind nun inzwischen jedoch auch einfachere Anlagen für die Durchmesserbestimmung eines Baumstamms, die nicht mit Schattenbildkameras arbeiten, sondern bei denen aus drei Richtungen mit jeweils einer Ultraschallsende/empfangseinrichtung der Abstand vom jeweils zu vermessenden Stamm bestimmt wird. Entsprechende Anlagen und Verfahren sind ferner für die Fertigungsindustrie in der Patentschrift US-A-4 095 475 beschrieben. Dabei ist jedoch je nach Durchmesser und Position des zu vermessenden Baumstammes unter Umständen mit relativ großen Meßtoleranzen zu rechnen. Eine Einrichtung der eingangs genannten Art ist aus der Firmenschrift "Serie 942 Ultraschall-Abstandssensoren", Honeywell MICRO SWITCH bekannt.

Aufgabe der Erfindung ist es, eine Einrichtung dieser Art so auszubilden, daß die Verwendung von reflektorisch arbeitenden Abstandsmeßeinrichtungen, die vorzugsweise nach dem Ultraschallprinzip arbeiten, möglich ist und daß eine äußerst einfache Bestimmung des Zentrums des zu erfassenden Gegenstandes erreicht wird, die Meßgenauigkeit allerdings von der Anzahl von Abstandsmeßeinrichtungen je Zeile abhängt.

Gemäß der Erfindung wird diese Aufgabe bei einer Einrichtung der eingangs genannten Art so gelöst, daß aus der Aussage, welche der Abstandsmeßeinrichtungen das kleinste Meßergebnis geliefert hat, entsprechend deren Lage innerhalb der Zeile der Meßeinrichtungen elektronische Umsetzer eine Koordinate für das Zentrum des Gegenstandes detektieren.

Die Anordnung der jeweiligen Meßeinrichtungen kann dann, wenn in Meßrichtung kein fester Anschlag für das Objekt vorgesehen ist, vorteilhafterweise soausgebildet sein, daß jeweils zwei Zeilen von Abstandsmeßeinrichtungen beidseitig so neben dem Gegenstand angeordnet sind, daß sie eine Schrankenanordnung bilden. Wenn jedoch der Gegenstand gegenüber einem definierten Anschlag geführt ist, ist es auch möglich, daß eine Zeile von Abstandsmeßeinrichtungen sozusagen als Halbschrankenanordnung parallel zur Ebene des Anschlags auf den Gegenstand ausgerichtet ist.

Falls die räumlichen Umstände es bedingen, ist es allerdings auch möglich, daß mehrere Zeilen von Abstandsmeßeinrichtungen in von den Orthogonalachsen abweichenden Winkeln zum Gegenstand ausgerichtet sind. Die Winkel stellung der Zeilen zueinander müßte dann in der jeweiligen Auswertung berücksichtigt werden.

Damit sich die einzelnen Abstandsmeßeinrichtungen gegenseitig nicht stören, ist es vorteilhaft, daß die Abstandsmeßeinrichtung durch Frequenzauswahl, Frequenzcodierung und/ oder Zeitsteuerung voneinander entkoppelt sind. Neben diesen technisch relativ aufwendigen Lösungen ist es jedoch auch möglich, daß mindestens die Abstandsmeßeinrichtungen jeweils einer Schrankenanordnung bzw. Halbschrankenanordnung zeitlich synchron wirksamschaltbar sind. Die zeitliche Verzögerung kann dabei individuell pro Abstandsmeßeinrichtung (BERO) variiert werden.

Da die Abstandsmeßeinrichtungen nicht nur auf den zu vermessenden Gegenstand einwirken, sondern beispielsweise auch Gegenstände in der Umgebung Rückwirkungen zeitigen können, ist es vorteilhaft, daß die bei gegenstandsfreiem Arbeitsraum sich ergebenden Abstandssignale eine um ein Toleranzband erweiterbare Abstandsmaske bilden, welche die im Gegenstandsmeßbetrieb sich ergebenden Abstandsmessungen als nicht auf den zu vermessenden Gegenstand bezogene Abstandswerte mittels elektronischer Mittel ausblendet. Störende gegenseitige Beeinflussungen der einzelnen Abstandsmeßeinrichtungen zueinander können dadurch ausgeblendet werden, daß die die Abstandsmaske bildenden Abstandssignale dadurch gewonnen werden, daß reihum jede der Abstandsmeßeinrichtungen einzeln wirksamschaltbar ist und damit ein Geräteumgebungsabbild gibt und/oder daß jeweils reihum jede der Abstandsmeßeinrichtungen die Signale der anderen Abstandsmeßeinrichtungen empfängt und damit ein Fremdbeeinflussungsabbild gibt.

Ausführungsbeispiele der Erfindung sind in der Zeichnung dargestellt und werden im folgenden naher erläutert. Dabei zeigen:
FIG 1 und 2 das bekannte Meßprinzip,
FIG 3 das erfindungsgemäße Prinzip,
FIG 4 eine Vollschrankenanordnung,
FIG 5 eine Anordnung mit einer Voll- und einer Halbschranke
FIG 6 zwei Vollschranken,
FIG 7 eine schrägwinklige Anordnung,
FIG 8 eine Schrankenanordnung mit Korrektureinrichtung.

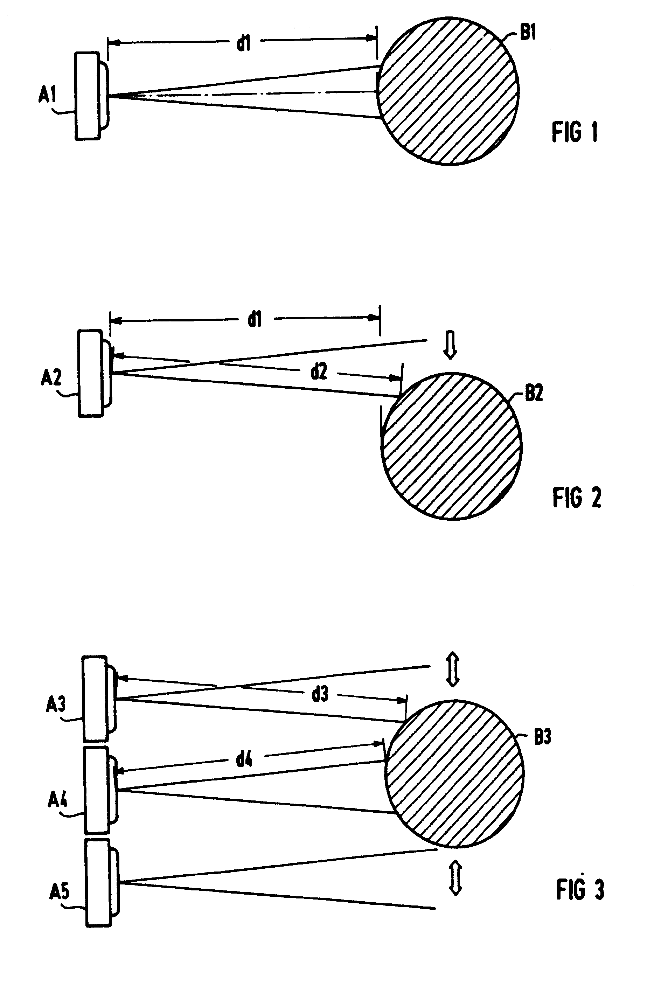

In der Anordnung gemäß FIG 1 ist ein Baumstamm B1 gezeigt, dessen Abstand zu einer Abstandsmeßeinrichtung A1, beispielsweise einem Ultraschallsender/empfanger, bestimmt wird. Die Abstandsmeßeinrichtung A1 sendet dazu ein Meßsignal aus, das in einem gewissen Abstrahlwinkel abgegeben wird und das jeweils zuerst eintretende reflektierte Signal gibt ein Maß für den jeweiligen Abstand des Baumstammes B1 von der Abstandsmeßeinrichtung A1 an. Im Ausführungsbeispiel würde das reflektierte Signal entlang der strichpunktierten Linie verlaufen. Ergeben würde sich bei derartiger Abstandsmessung ein Abstand d1.

In der Darstellung gemäß FIG 2 ist angenommen, daß ein Baumstamm B2, der hinsichtlich seiner Abmessungen dem Baumstamm B1 entsprechen möge, nicht genau der Abstandseinrichtung, in diesem Fall der Abstandseinrichtung A2, gegenüberliegen würde, sondern in der durch einen offenen Pfeil angedeuteten Richtung verschoben wäre. Dabei wird von der Abstandsmeßeinrichtung A2 als Abstand ein Abstand d2 detektiert und nicht der tatsächliche Abstand d1 zur Ebene der jeweiligen Abstandsmeßeinrichtung A2. Damit kann jedoch nur schwer ein korrektes Aussagekriterium über den Durchmesser des zu vermessenden Baumstammes, in diesem Fall des Baumstammes B2, gewonnenen werden.

Hier setzt die Erfindung ein, indem nicht nur eine einzige Abstandsmeßeinrichtung von einer Richtung her auf den zu vermessenden Baumstamm einwirkt, sondern indem - wie in FIG 3 angedeutet - in einer Zeile beispielsweise drei Abstandsmeßeinrichtungen A3-A5 als Ultraschall-BEROs angeordnet sind, die jeweils mit ihrem Abstrahlwinkel in Richtung auf die zu erwartenden Gegenstände ausgerichtet sind. Beim Ausführungsbeispiel mit einem Baumstamm B3, der hinsichtlich seines Durchmessers den Baumstämmen B1 und B2 entsprechen möge, würde dabei die Abstandsmeßeinrichtung A3 ein Meßergebnis d3 liefern, die Abstandsmeßeinrichtung A5 würde kein Meßergebnis liefern und die Abstandsmeßeinrichtung A4 würde ein Abstandssignal d4 liefern. Dieses Abstandssignal d4 wäre als kürzestes Abstandssignal in einer der Übersichtlichkeit halber nicht dargestellten Auswerteeinrichtungen aus den drei Signalen als bestes Signal auszuwählen, da es nahezu dem idealen Signal d1 trotz der verschobenen Lage des Baumstamms B2 entspräche.

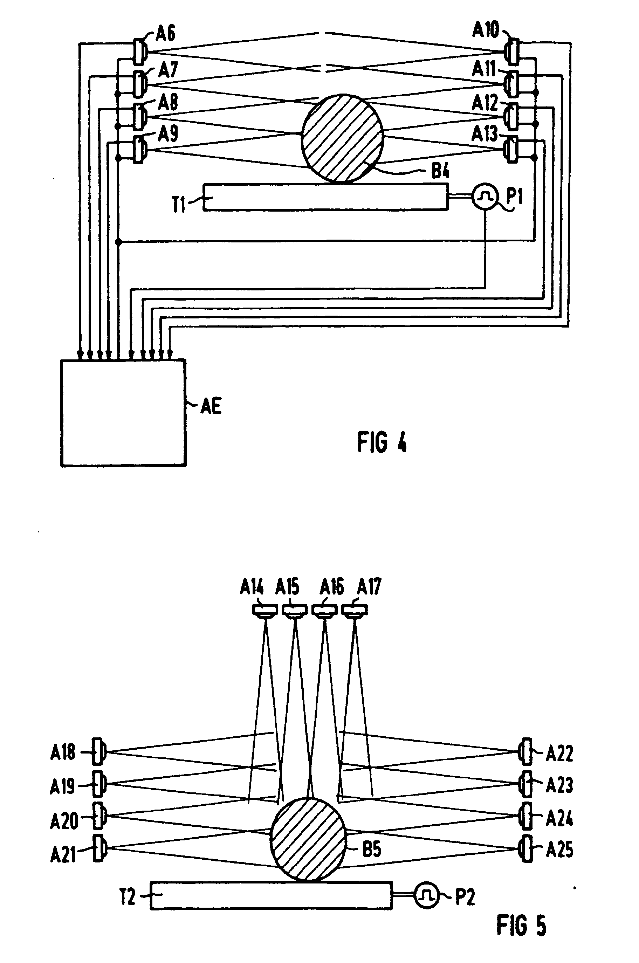

In der Darstellung gemäß FIG 4 ist sozusagen eine "Schrankenanordnung" von zwei Zeilen von Abstandsmeßeinrichtungen gezeigt. Die erste Zeile von Abstandsmeßeinrichtungen A6, A7, A8 und A9 und die zweite Zeile von Abstandsmeßeinrichtungen A10, A11, A12 und A13 stehen einander gegenüber und sind auf einen Baumstamm B4 ausgerichtet. Dieser wird auf einer Transportwalze T1 gelagert, deren Position - und damit die Axialbewegung des Baumstamms B4 - über einen Pulsgeber P1 ausgewertet wird. Abhängig von Impulsen des Pulsgebers P1 kann dann jeweils gleichzeitig eine Abstandsmessung von allen Meßeinrichtungen A6 bis A13 ausgelöst werden. Die Ausgangssignale gelangen dann an Auswerteeinrichtungen AE. Auf die weitere Auswertung der Signale wird im folgenden noch eingegangen werden. Es kann aber schon jetzt gesagt werden, daß jeweils die kleinsten Werte der Abstandsmessungen einer Zeile die Entfernung des Baumstammes B4 von der jeweiligen Zeile angeben, daß aus der bekannten Entfernung zwischen beiden Zeilen und diesen davon zu subtrahierenden Meßsignalen der Durchmesser des Baumstammes B4 gewonnen wird und daß aus der Tatsache, welche Abstandsmeßeinrichtungen innerhalb einer jeweiligen Zeile das jeweils kürzeste Signal gewonnen hat, auf die vertikale Lage des Zentrums des Baumstammes B4 geschlossen werden kann. Die horizontale Lage gegenüber einer Mittenlage ergibt sich durch die Differenz der beiden ausgewählten Abstandswerte.

In der Darstellung gemäß FIG 5 ist angedeutet, daß eine Vollschrankenmeßeinrichtungen aus zwei Zeilen von Abstandsmeßeinrichtungen A18 bis A21 und A22 bis A25 durchaus noch durch eine weitere Zeile von Abstandsmeßeinrichtungen A14 bis A17 ergänzt werden kann, die oberhalb der Transportwalze T2 angedeutet ist, an der ebenso wie bei der Transportwalze T1 ein Pulsgeber, in diesem Fall ein Pulsgeber P2, angeordnet sein kann.

Prinzipiell ist stets dann die Anordnung einer einzigen Zeile von Abstandsmeßeinrichtungen A14 bis A17 möglich, wenn davon auszugehen ist, daß der jeweils zu vermessende Gegenstand, in diesem Fall der Baumstamm B5 definiert gegenüber einem Anschlag geführt ist, hier z.B. auf der Transportwalze T2 aufliegt. Eine solche Anordnung kann als "Halbschranke" bezeichnet sein. Demgemäß ergibt sich hier ein Durchmesser durch die Differenz der Entfernung Transportebene zur Anordnung von den Abstandsmeßeinrichtungen A14 bis A17. Diese vertikal ausgerichtete Anordnung sollte allerdings nicht zeitgleich mit den horizontal ausgerichteten Anordnungen aus den Abstandsmeßeinrichtungen A18 bis A25 geschaltet werden, sondern sollte synchron, jedoch mit einem geringen zeitlichen Versatz aktiv sein, um Einflußnahmen durch Nebenkeulen der Signale der Abstandsmeßeinrichtungen A14 bis A25 zu vermeiden.

Bei einer solchen Anordnung, wie in der Darstellung gemäß FIG 5 gezeigt, ist es durchaus auch möglich, nicht nur Aussagen über einen nahezu ideal kreisförmigen Gegenstand hinsichtlich seines Durchmessers zu treffen, sondern es wäre auch möglich, Ovalitäten zu erkennen, da sowohl eine Durchmessererfassung und Lageerfassung in Horizontalebene mit Hilfe der Abstandsmeßeinrichtungen A18 bis A25 möglich ist, da jedoch durch die Abstandsmeßeinrichtungen A14 bis A17 auch eine Durchmessererfassung und Lageerfassung in Vertikalebene erfolgt. An Stelle einer Zeile von Abstandsmeßeinrichtungen A14 bis A17 wäre hier auch eine Reduzierung einer einzigen Abstandsmeßeinrichtung möglich.

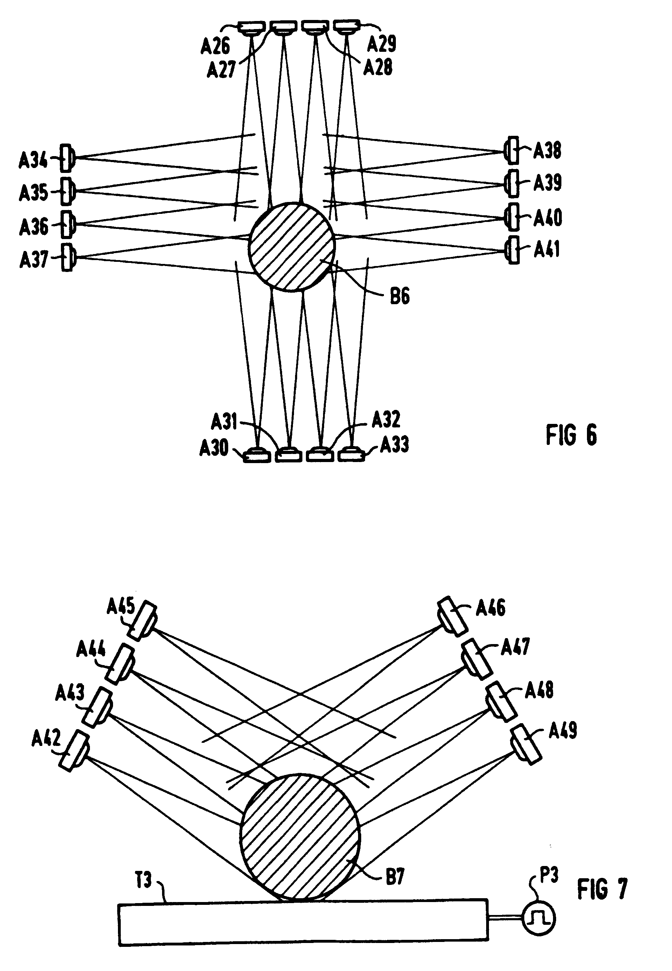

Prinzipiell kann eine Horizontal- und Vertikalvermessung auch dadurch erfolgen, indem zwei Vollschrankenanordnungen verwendet werden, wie dies in der Darstellung gemäß FIG 6 gezeigt ist. Die horizontal wirksame Schranke ist dabei durch die Zeilen aus den Abstandsmeßeinrichtungen A34 bis A37 und A38 bis A41 gegeben, die vertikal wirkende Meßeinrichtung ist dabei durch die Zeilen aus den Abstandsmeßeinrichtungen A26 bis A29 und A30 bis A33 realisiert. In diesem Fall möge ein Baumstamm B6 zu vermessen sein.

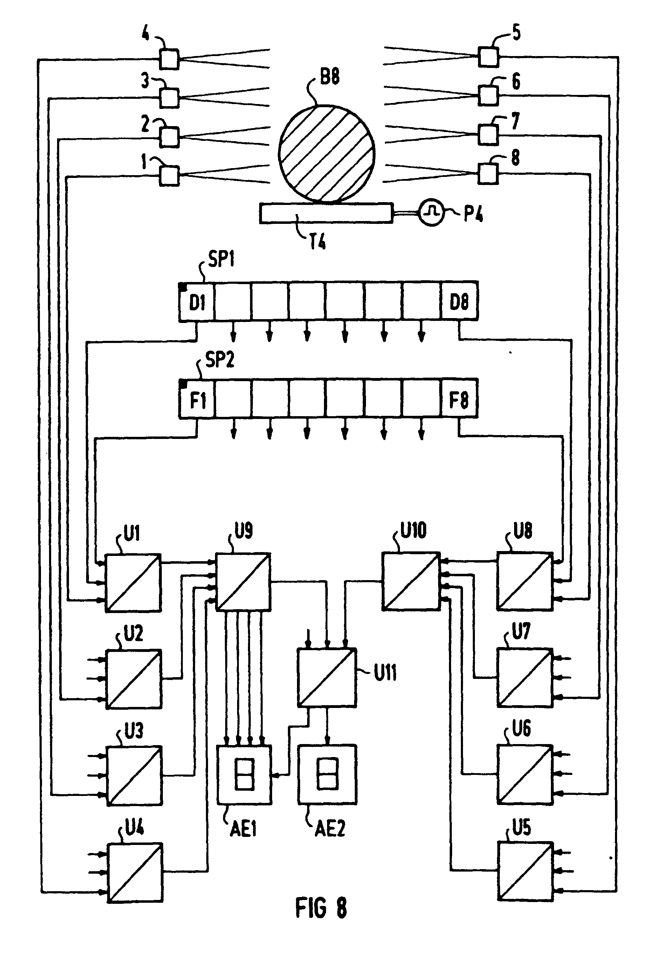

In der Darstellung gemäß FIG 7 ist gezeigt, daß es prinzipiell auch möglich ist, nicht nur orthogonal einen Baumstamm B7 zu vermessen, der auf einer Transportrolle T3, an der ein Pulsgeber P3 angeordnet sein möge, gelagert ist, sondern daß es auch möglich ist, in schrägen Winkeln derartige Maßvorgänge zu realisieren. Dies kann dann günstig sein, wenn die räumlichen Gegebenheiten der Anlage dies erfordern, jedoch muß dann die zugehörige elektronische Auswerteeinrichtung die jeweiligen Winkelpositionen der einzelnen Zeilen gegeneinander berücksichtigen.

In der Darstellung gemäß FIG 8 ist eine Anordnung gezeigt, die prinzipiell derjenigen gemäß FIG 4 entspricht. Hier sind zwei Zeilen von Abstandsmeßeinrichtungen 1 bis 4 und 5 bis 8 seitlich neben einem Baumstamm B8 angeordnet, der auf einer Transportrolle T4 gelagert sein möge. Auch an dieser Transportrolle T4 kann dann ein Pulsgeber, in diesem Fall ein Pulsgeber P4 (auch eine Längenmeßeinrichtung wäre prinzipiell einsetzbar), angeordnet sein, der, wie im einzelnen der Übersichtlichkeit halber nicht gezeigt ist, beispielsweise nach kurzen Wegabschnitten jeweils sämtliche Abstandsmeßeinrichtungen 1 bis 8 zum synchronen Auslösen eines Meßvorganges triggert. Die Meßergebnisse der Abstands standsmeßeinrichtungen 1 bis 8 gelangen dabei über Umsetzer U1 bis U8, auf die im folgenden noch eingegangen wird, an Umsetzer U9 bzw. U10, die jeweils das kleinste Abstandsmeßsignal an einen Umsetzer U11 schalten, der über einen weiteren Eingang über die Entfernung zwischen den Zeilen von Abstandsmeßeinrichtungen 1 bis 4 und 5 bis 8 informiert ist. Aus diesem Wert abzüglich der beiden jeweils kleinsten Abstandssignale ermittelt dann der Umsetzer U11 ein Durchmessersignal für den Baumstamm B8 und kann dieses Signal beispielsweise über eine Anzeigeeinrichtung AE2 anzeigen und an der Übersichtlichkeit halber nicht gezeigte weitere Verarbeitungseinrichtung weiterleiten.

Vor dem eigentlichen Meßvorgang ist es jedoch möglich, beispielsweise einzeln die Abstandsmeßeinrichtungen 1 bis 8 reihum anzusteuern, so daß die zurückkommenden Echos als Umgebungsreflektionssignale sozusagen einen "Devicewert" ergeben. Diese Werte D1 bis D8 können dann für jede der Abstandsmeßeinrichtungen A1 bis A8 in einem Speicher SP1 abgelegt werden. Dabei kann um diese Werte D1 bis D8 jeweils ein Toleranzbereich gelegt werden, so daß sich insgesamt eine Maske für die Geräteumgebung ergibt.

Ferner kann die gegenseitige Beeinflussung der Abstandsmeßeinrichtungen 1 bis 8 zueinander, beispielsweise die Beeinflussung der Abstandsmeßeinrichtung A4 durch das direkt ausgesandte Signal der Abstandsmeßeinrichtung A5, detektiert werden, indem beispielsweise reihum jeweils eine der Abstandsmeßeinrichtungen 1 bis 8 auf Empfang steht und die übrigen senden. Dabei werden die "nicht Echos" der Nachbarsender erkannt und die Werte F1 bis F8 als Ausblendfenster hinterlegt. Weiterhin können in dieser Betriebsart alle Abstandsmeßeinrichtungen 1 bis 8 gemeinsam ohne Objekt senden und dabei pro Abstandsmeßeinrichtung 1 bis 8 die Ausblendfenster ermittelt werden. Die Werte F1 bis F8 können in einem Speicher SP2 abgelegt sein, der die jeweilige Fremdbeeinflussung angibt. Auch hier kann jedem Wert ein Umgebungsbereich zugeordnet werden, so daß eine Fremdbeeinflussungsmaske entsteht.

Eben diese Maskenwerte aus den Speichern SP1 und SP2 werden den einzelnen Umsetzern U1 bis U8 zugeleitet. Im Ausführungsbeispiel ist dies für die Werte D1 und F1 zum Umsetzer U1 und die Werte DB und F8 zum Umsetzer U8 gezeigt. Wenn nun die Signale der Abstandsmeßeinrichtung 1 bzw. der Abstandsmeßeinrichtung 8 in die Maskenbereiche fallen, so werden diese Meßwerte elektronisch ausgeblendet.

Im Blockschaltbild ist ferner noch angedeutet, daß der Umsetzer U9 an eine Anzeigeeinrichtung AE1 geschaltet ist. Und zwar wird vom Umsetzer U9 erkannt, welche der Abstandsmeßeinrichtungen 1 bis 4 das jeweils kleinste Meßsignal geliefert hat. Nun kann jedoch davon ausgegangen werden, daß gerade dann das Zentrum des Baumstamms B8 sich in etwa in der Position dieser Meßeinrichtung befindet. Ein diesbezügliches Signal, das die Vertikallage des Baumstamms B8 angibt, kann dann auf der Anzeigeeinrichtung AE1 dargestellt werden. Im Umsetzer U11 kann weiterhin aus der Differenz zwischen den kleinsten Abstandssignalen der Abstandsmeßeinrichtungen 5 bis 8 und bis 4 auf eine Außermittigkeit bezüglich der Horizontallage des Baumstamms B8 zwischen den Zeilen geschlossen werden und demgemäß kann auch die Horizontallage des Zentrums des Baumstamms B8 auf der Anzeigeeinrichtung AE1 relativ genau angezeigt werden. (Bei einer Halbschrankenanordnung wird aus der Differenz zwischen kleinsten Abstandsmeßwert und Abstand zum Anschlag auf den Durchmesser geschlossen. Die Zentrumslage ergibt sich dabei selbstverständlich relativ genau um den Wert des halben Durchmessers vor dem Anschlag.) Selbstverständlich können diese Signale für die Vertikal- und die Horizontallage auch den der Übersichtlichkeit halber nicht dargestellten weiteren Auswerteeinrichtungen zugeführt werden.

Eine bekannte Umgebungs- und Fremdbeeinflussung ermöglicht es durchaus, daß beim Einschalten der Anlage sozusagen ein Selbsttest vorgenommen wird. Dabei wird geprüft, ob die gemessenen Werte noch innerhalb der gespeicherten Ausblendfenster liegen. So können beispielsweise Abstandsveränderungen durch mechanische Beschädigungen oder Verschmutzungen der Abstandsmeßeinrichtung, beispielsweise durch harzhaltigen Holzstaub erkannt werden.

## Patentansprüche

1. Einrichtung zum Erfassen des Durchmessers und/oder der Lage des Zentrums eines im Querschnitt runden Gegenstandes (B1-B8), insbesondere eines Baumstammes, unter Verwendung von reflektorisch arbeitenden Abstandsmeßeinrichtungen, die vorzugsweise nach dem Ultraschallprinzip arbeiten und deren räumliche Anordnung zusammen mit einer eventuell vorhandenen Führungs- und Transportebene des zu messenden Gegenstands (B1-B8) einen Arbeitsraum definieren, wobei jeweils mehrere Abstandsmeßeinrichtungen (A3-A49, 1-8) in mindestens einer Zeile nebeneinander jeweils angeordnet sind und wobei von den Abstandsmeßergebnissen einer Zeile jeweils das jeweils kleinste Meßergebnis in einer elektronischen Auswerteeinrichtung (U9,U10,U11) zur Durchmesserbestimmung und/oder Lagebestimmung für das Zentrum herangezogen wird,
**dadurch gekennzeichnet, daß** im Nor-Normalbetrieb aus der Aussage, welche der Abstandsmeßeinrichtungen das kleinste Meßergebnis geliefert hat, entsprechend deren Lage innerhalb der Zeile der Meßeinrichtungen elektronische Umsetzer (U9) eine Koordinate für das Zentrum des Gegenstandes (B3 bis B8) detektieren.

2. Einrichtung nach Anspruch 1, **dadurch gekennzeichnet, daß** zwei Zeilen von Abstandsmeßeinrichtungen (A6-A9 zu A10-A13; A18-A21 zu A22-A25; A26-A29 zu A30-A33; A34-A37 zu A38-A41; 1-4 zu 5-8) jeweils paarweise gegenüberliegend, beidseitig so neben dem Gegenstand (B4-B6, B8) angeordnet sind, daß sie so eine Schrankenanordnung bilden.

3. Einrichtung nach Anspruch 1 oder 2, wobei der Gegenstand definiert in einer Ebene geführt ist, **dadurch gekennzeichnet, daß** eine Zeile von Abstandsmeßeinrichtungen (A14-A17,A42-A45,A46-A49) sozusagen als Halbschranke auf eine Führungsebene (T2,T3) des Gegenstandes (B5,B7) gerichtet sind.

4. Einrichtung nach einem der vorstehenden Ansprüche,
**dadurch gekennzeichnet, daß** mehrere Zeilen von Abstandsmeßeinrichtungen (A42-A45, A46-A49) in nicht orthogonalen Winkeln zueinander stehen und zum Gegenstand (B7) ausgerichtet sind.

5. Einrichtung nach einem der vorstehenden Ansprüche,
**dadurch gekennzeichnet, daß** die Abstandsmeßeinrichtungen (A3-A49, 1-8) durch Frequenzauswahl, Frequenzcodierung und/oder Zeitsteuerung voneinander entkoppelt sind.

6. Einrichtung nach einem der Ansprüche 1 bis 4, **dadurch gekennzeichnet, daß** in Betrieb mindestens die Abstandsmeßeinrichtungen einer Schrankenanordnung bzw. Halbschrankenanordnung (A6-A49, 1-8) zeitlich synchronisierte Meßungen ausführen.

7. Einrichtung nach einem der vorstehenden Ansprüche,
**dadurch gekennzeichnet, daß** die bei gegenstandsfreiem Arbeitsraum sich ergebenden Abstandssignale eine um ein Toleranzband erweiterbare Abstandsmaske bilden, welche die im Gegenstandsmeßbetrieb sich ergebenden Abstandsmessungen als nicht auf den zu vermessenden Gegenstand bezogene Abstandswerte mittels elektronischer Mittel ausblendet.

8. Einrichtung nach Anspruch 7, **dadurch gekennzeichnet, daß** die die Abstandsmaske bildenden Abstandssignale dadurch gewonnen werden, daß reihum jede der Abstandsmeßeinrichtungen (A6-A49, 1-8) einzeln mißt und damit ein Geräteumgebungsabbild gibt und/oder daß jeweils reihum jede der Abstandsmeßeinrichtungen (A6-A49, 1-8) die Signale der anderen Abstandsmeßeinrichtungen (A6-A49, 1-8) empfängt und damit ein Fremdbeeinflussungsabbild gibt.

## Claims

1. Device for recording the diameter and/or position of the centre of an object (B1-B8) which is round in cross-section, in particular a tree trunk, using reflection-based distance measurement devices which preferably work on the ultrasound principle and the spatial arrangement of which, together with any management and transport layer of the object (B1-B8) to be measured, define a workspace, a plurality of distance measurement devices (A3-A49, 1-8) being arranged in each case in at least one line next to one another, and the smallest measurement result in each case from the distance measurement results of a line in each case being used in an electronic evaluation device (U9, U10, U11) to determine the diameter and/or position for the centre, **characterised in that** in normal operation the information as to which of the distance measurement devices supplied the smallest measurement result, in accordance with in its position within the line of measuring devices, is used by electronic converters (U9) to detect a coordinate for the centre of the object (B3 to B8).

2. Device according to Claim 1, **characterised in that** two lines of distance measurement devices (A6-A9 to A10-A13; A18-A21 to A22-A25; A26-A29 to A30-A33; A34-A37 to A38-A41; 1-4 to 5-8) are arranged in pairs in each case opposite one another, near the object (B4-B6, B8) on both sides, so that they form a barrier arrangement.

3. Device according to Claim 1 or 2, the object being managed in a defined manner in a layer, **characterised in that** a line of distance measurement devices (A14-A17, A42-A45, A46-A49) is directed as it were as a semi-barrier at a management layer (T2, T3) of the object (B5, B7).

4. Device according to one of the preceding claims, **characterised in that** a plurality of lines of distance measurement devices (A42-A45, A46-A49) stand at non-orthogonal angles to one another and are orientated towards the object (B7).

5. Device according to one of the preceding claims, **characterised in that** the distance measurement devices (A3-A49, 1-8) are decoupled from one another by frequency selection, frequency coding and/or timing.

6. Device according to one of Claims 1 to 4, **characterised in that** in operation at least the distance measurement devices of one barrier arrangement or semi-barrier arrangement (A6-A49, 1-8) execute chronologically synchronised measurements.

7. Device according to one of the preceding claims, **characterised in that** the distance signals produced in an object-free workspace form a distance mask which can be expanded by a tolerance band, and which by electronic means masks out the distance measurements produced in object measurement mode as distance values not related to the object to be measured.

8. Device according to Claim 7, **characterised in that** the distance signals forming the distance mask are obtained by each of the distance measurement devices (A6-A49, 1-8) measuring individually in turn, thereby producing an image of the device's surroundings and/or by each of the distance measurement devices (A6-A49, 1-8) receiving the signals in turn in each case from the other distance measurement devices (A6-A49, 1-8) and thereby producing an external influence image.

## Revendications

1. Dispositif de détermination du diamètre et/ou de la position du centre d'un objet (B1-B8) de section ronde, en particulier d'un tronc d'arbre, moyennant l'utilisation de dispositifs de mesure de distance qui fonctionnent par réflexion et, de préférence, par ultrasons et dont l'agencement dans l'espace, de paire avec un éventuel plan de guidage et de transport de l'objet (B1-B8) à mesurer, définit un espace de travail, plusieurs dispositifs de mesure de distance (A3-A49, 1-8) étant disposés les uns à côté des autres sur au moins une rangée, et le plus petit des résultats de mesure de distance d'une rangée étant utilisé dans un dispositif de traitement (U9, U10, U11) électronique pour déterminer le diamètre et/ou déterminer la position du centre, **caractérisé en ce que** en fonctionnement normal, à partir de l'information indiquant celui des dispositifs de mesure de distance qui a fourni le plus petit résultat de mesure, des convertisseurs (U9) électroniques détectent, en fonction de la position de ce dispositif de mesure dans la rangée de dispositifs de mesure, une coordonnée pour le centre de l'objet (B3 à B8).

2. Dispositif selon la revendication 1, **caractérisé en ce que** deux rangées de dispositifs de mesure de distance (A6-A9 pour A10-A13 ; A18-A21 pour A22-A25 ; A26-A29 pour A30-A33 ; A34-A37 pour A38-A41 ; 1-4 pour 5-8) sont disposées par paires en face l'une de l'autre de part et d'autre de l'objet (B4-B6, B8) de telle façon qu'elles forment une barrière.

3. Dispositif selon la revendication 1 ou 2, l'objet étant guidé de manière définie dans un plan, **caractérisé en ce qu'**une rangée de dispositifs de mesure de distance (A14-A17, A42-A45, A46-A49) formant pour ainsi dire une demi-barrière est dirigée sur un plan de guidage (T2, T3) de l'objet (B5, B7).

4. Dispositif selon l'une des revendications précédentes, **caractérisé en ce que** plusieurs rangées de dispositifs de mesure de distance (A42-A45, A46-A49) forment entre elles des angles non orthogonaux et sont dirigées vers l'objet (B7).

5. Dispositif selon l'une des revendications précédentes, **caractérisé en ce que** les dispositifs de mesure de distance (A3-A49, 1-8) sont découplés les uns des autres par un choix de fréquences, un codage de fréquences et/ou par synchronisation.

6. Dispositif selon l'une des revendications 1 à 4, **caractérisé en ce que** en fonctionnement, au moins les dispositifs de mesure de distance d'un agencement formant une barrière ou une demi-barrière (A6-A49, 1-8) effectuent des mesures synchronisées dans le temps.

7. Dispositif selon l'une des revendications précédentes, **caractérisé en ce que** les signaux de distance obtenus avec un espace de travail exempt d'objets forment un masque qui peut être élargi d'une bande de tolérance et qui, par des moyens électroniques, extrait les mesures de distance obtenues en mode de mesure d'objet en tant que valeurs de distance ne se rapportant pas à l'objet à mesurer.

8. Dispositif selon la revendication 7, **caractérisé en ce que** les signaux de distance formant le masque sont obtenus par le fait que chacun des dispositifs de mesure de distance (A6-A49, 1-8) peut être activé individuellement à son tour et fournit ainsi une image de l'environnement de l'appareil et/ou par le fait que chacun des dispositifs de mesure de distance (A6-A49, 1-8) reçoit à tour de rôle les signaux des autres dispositifs de mesure (A6-A49, 1-8) de distance et fournit ainsi une image des influences extérieures.
